Europäisches Patentamt

European Patent Office

Office européen des brevets

(19)

(11) Publication number: **0 119 784**
A1

(12) # EUROPEAN PATENT APPLICATION

(21) Application number: **84301465.5**

(22) Date of filing: **06.03.84**

(51) Int. Cl.³: **F 16 D 25/08**

(30) Priority: **21.03.83 US 477162**
**21.03.83 US 477161**
**21.03.83 US 477159**
**21.03.83 US 477160**

(43) Date of publication of application: **26.09.84**
**Bulletin 84/39**

(84) Designated Contracting States: **BE DE FR GB IT SE**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Shirley, Graham John, 773, Royal Coachman Apartment 2, Troy Michigan 48084 (US)**
Inventor: **Leigh-Monstevens, Keith Vernon, 5622 Larkins, Troy Michigan 48098 (US)**

(74) Representative: **Adkins, Michael et al, Withers & Rogers 4 Dyer's Buildings, Holborn London, EC1N 2JT (GB)**

(54) An actuator for a motor vehicle clutch control mechanism.

(57) An actuator for moving the release bearing (60) of a motor vehicle clutch (11) has an output member (36) with a resilient lip (134) to engage a tubular member (36) integral with a similar member (38) of the casing (15) defining an annular hydraulic chamber (34) for the piston (40).

Release bearing biassing means (74) may act on a protective cover (60) having a projection (68) co-operating with a stop (80) on the member (38). For shipping and installation a strap (94) with a frangible portion (100) may locate the release bearing.

MA/TH

— 1 —

# AN ACTUATOR FOR A MOTOR VEHICLE CLUTCH CONTROL MECHANISM

The present invention relates to an actuator for a motor vehicle clutch and is particularly but not exclusively concerned with improvements in slave cylinders for actuating vehicle clutches.

Certain types of actuators include actuating means, e.g. a piston, for transmitting movement through an output member to a release bearing for the clutch. It is most important to keep working parts of actuators as clean as possible during use and an object of one aspect of the present invention is to improve sealing of such actuators against ingrease of foreign matter.

According to one aspect of the invention there is provided an actuator including actuating means for transmitting movement through an output member to a release bearing for the clutch, characterised in that said output member includes a resilient lip which slidably engages an adjacent portion of the actuator to form a seal.

Preferably the output member comprises a sleeve which may converge towards the axis of the sleeve. Sealing may be enhanced by forming the lip so that it terminates at a sharp tip.

- 2 -

0119784

In a preferred embodiment the actuating means is a piston slidable in a chamber, the chamber being defined between first and second members and said lip engaging said first member. In such a case the first and second members may be tubular with the first tubular member disposed coaxially within the second tubular member.

The use of a sealing lip provides an effective and convenient seal against ingrease of unwanted matter into the working parts of the actuator.

An object of another aspect of the invention is to provide a convenient means of limiting displacement of the clutch release bearing where biasing means is provided for constantly urging the release bearing in a given direction. According to said other aspect of the invention there is provided an actuator for a motor vehicle clutch including actuating means for transmitting movement to a release bearing for the clutch, characterised in that there is provided biasing means for constantly urging the release bearing in a given direction and a protective cover fast, in use, with said release bearing, said cover being co-operable with stop means to limit displacement of said release bearing by said biasing means. Such a protective cover may also be used in actuators of the kind referred to in the four immediately preceding paragraphs.

Preferably the cover is tubular and surrounds a tubular member housing said actuating means, said cover including an inwardly directed flange which slidably engages said tubular member.

- 3 -

The cover may include an inward projection extending longitudinally thereof to restrict rotational movement of the cover.

Where the actuating means transmits movement through an output member the cover may be formed integrally with the output member.

An object of a further aspect of the invention is to provide an actuator having an improved shipping and installation device e.g. a strap, to inhibit unwanted movement of a working part of the actuator during shipping and installation. Therefore according to a further aspect of the invention there is provided an actuator including acutating means for transmitting movement through an output member to a release bearing for the clutch, characterised in that there is provided a shipping and installation device comprising elongate connector means fast at one end to a casing of the actuator and fast at the end to a holding portion so as to inhibit unwanted movement of said output member during shipping, said connector means having a portion of reduced strength such that first actuation of said actuator causes said connector means to break at said portion of reduced strength whereby said actuator is thereafter free to operate normally. Such a shipping and installation device may also be used with an actuator of the kind set out in any of the eight immediately preceding paragraphs where the actuating means transmits movement through an output member.

The holding portion of the shipping and installation device may be annular.

The holding portion may be attached to or integral with the said output member.

Where a protective cover is provided the shipping and installation device may be attached to or integral with said cover.

An object of yet another aspect of the invention is to provide an actuator having a simplified construction for defining a chamber which houses a piston. Therefore according to this aspect of the invention there is provided an actuator for a motor vehicle clutch including a piston slidable within a chamber for transmitting movement to a release bearing for the clutch, characterised in that said chamber is defined by first and second members made integrally in one piece. Such an arrangement may be used in an actuator according to any of the twelve immedaitely preceding paragraphs where the actuating means is a piston.

Actuators in accordance with the various aspects of the present invention will now be described by way of example with reference to the accompanying drawings wherein:

Fig. 1 is a schematic representation of a clutch hydraulic control apparatus according to the present invention;

Fig. 2 is a partial view of a slave cylinder from line 2-2 of Fig. 1;

Fig. 3 is a longitudinal section through the slave cylinder generally along line 3-3 of Fig. 2;

Fig. 4 is a longitudinal section through the slave cylinder along line 4-4 of Fig. 2;

Fig. 5 is a cross-section through the slave cylinder along line 5-5 of Fig. 3;

Fig. 6 is a partial side view of the slave cylinder from line 6-6 of Fig. 4;

Fig. 7 is a view similar to Fig. 4 but showing a modified slave cylinder in accordance with the invention;

Fig. 8 is another view similar to Fig. 4 but showing a further modified slave cylinder in accordance with the invention;

Fig. 9 is a partial view at an enlarged scale of a portion of sealing element of the slave cylinder illustrated at Figs. 7 and 8; and

Fig. 10 is a view similar to Fig. 9 but showing the element of Fig. 9 after assembly.

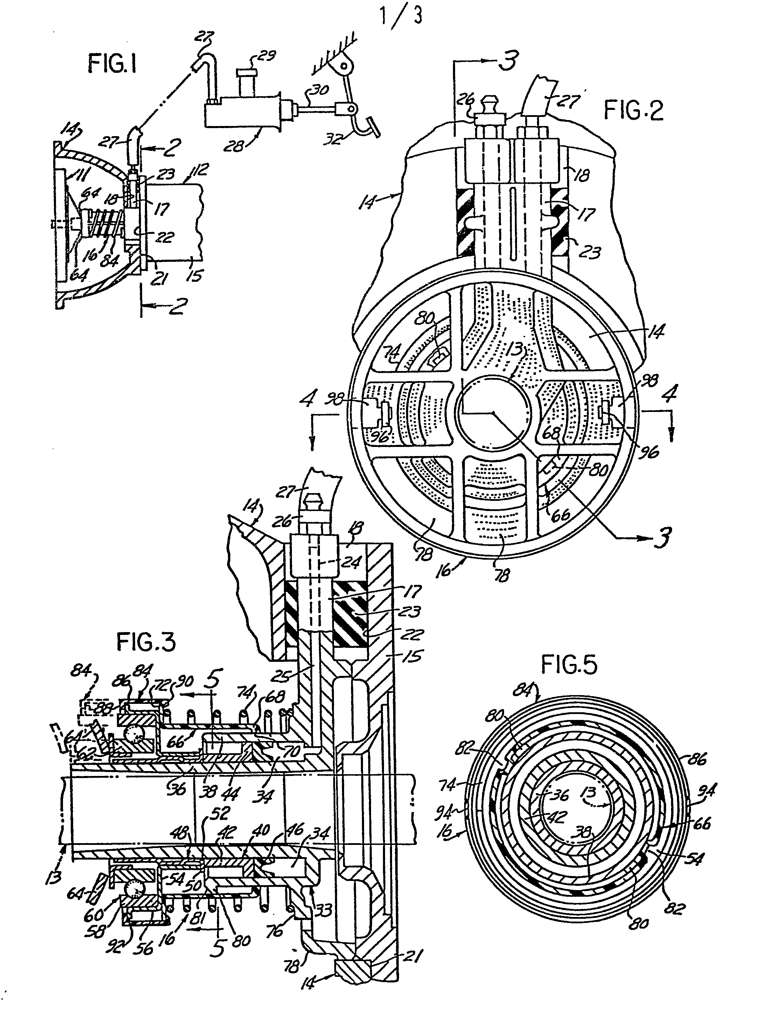

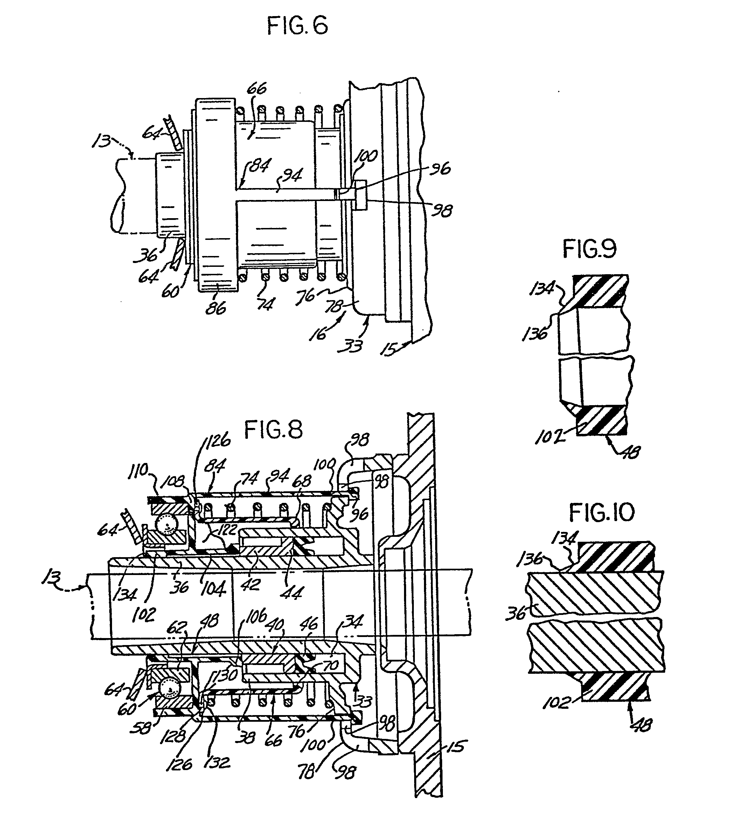

In Fig. 1 a motor vehicle transmission comprises a friction clutch assembly 11 and a gearbox or transmission 12 enclosed in a casing 15. A driveshaft 13 drives the gearbox 12 from the clutch assembly 11. A bell housing 14, surrounding the clutch assembly 11, is bolted on the rear face of the motor vehicle engine, not shown. The rear face 21 of the bell housing 14 is bolted to the face 22 of the gearbox casing 15. An annular hydraulic slave

- 6 -

cylinder 16 is disposed around the driveshaft 13 within the bell housing 14. The slave cylinder 16 has a radially outwardly projecting portion or lug 17 which is disposed in a radial groove or channel 18 formed in the rear face 21 of the clutch bell housing 14 attached to the face 22 of the gearbox casing 15 such that the projecting portion or lug 17 is sandwiched between the face 21 of the bell housing 14 and the face 22 of the gearbox housing 15. A generally annular elastomeric collar 23 is placed around the projecting portion or lug 17 such as to securely hold the slave cylinder projecting portion or lug 17 in the groove or channel 18 in the bell housing face 21 and against the face 22 of the gearbox casing 15. A pair of fluid passageways 24 and 25 run the length of the projecting portion or lug 17 into the slave cylinder 16. One passageway, for example passageway 24, is provided at its open end with a bleed nipple 26, and the other passageway 25 is connected via a hydraulic fluid conduit 27 to a master cylinder 28.

In the example shown, the master cylinder is provided with a built-in hydraulic fluid reservoir 29 and has an input rod 30 pivotally connected at an end to a clutch control pedal 32 installed within the driver compartment of a motor vehicle, not shown. The rod 30, as is well known, is connected to a piston, not shown, disposed in the master cylinder 28 for displacing the hydraulic fluid through the line 27 to the slave cylinder 16 when the clutch pedal 32 is depressed. The hydraulic fluid is displaced, through the passageway 25 in the slave cylinder radially projecting portion or lug 17, into the housing 33 of the slave cylinder 16 which is provided with an annular chamber 34. The annular chamber 34 is formed between two concentric tubular portions 36 and 38 which are preferably cast integrally together with the projecting portion or lug 17, for example of aluminum, in a single piece. However, the portions 36, 38 could be two separate members suitably disposed relative to each other, e.g. bolted together with sealing means for preventing leakage of hydraulic fluid to the ambient.

An annular piston 40, constituting the aforesaid actuating means, is reciprocably and slidably disposed in the cylinder housing 33 between the two concentric tubular portions 36 and 38, the piston 40 having a relatively thin cylindrical portion slidably fitting about the periphery of the inner tubular portion 36, as shown at 42, and an integrally formed larger diameter annular head portion 44 slidably fitting between the concentric tubular portions 36 and 38. An elastomeric seal 46 of V-shaped section is freely disposed in the annular chamber 34 above the annular head 44 of the piston 40, so as to prevent leakage of fluid from the annular chamber 34 past the piston 40.

A metallic sleeve or carrier 48 constituting the aforesaid output member, is slidably disposed around the periphery of the inner tubular portion 36 of the cylinder housing 33. The carrier 48 has a flanged end postion 50 freely engaged with the end face 52 of the cylindrical portion 42 of the piston 40, and another flange portion 54 disposed at its other end having a bent-over rim 56 fixedly supporting the outer race 58 of a ball bearing 60 forming the clutch release bearing, the bearing outer race 58 being for example press-fitted within the carrier rim 56. The inner race 62 of the release bearing 60 is arranged to engage the end of the clutch release fingers 64 such that when the release bearing 60 is displaced from the position indicated in full line at Fig. 3 to the position shown in phantom line, the clutch 11, Fig. 1 is released.

A protective dust cover 66 surrounds a portion of the carrier 48 and a portion of the peripheral surface of the outer tubular portion 38 of the cylinder housing 33. The dust cover 66 is generally cylindrical in shape and is molded of plastic such as nylon. One end of the dust cover 66 is formed with an inwardly radially projecting flange or lip 68 having an inner edge 70 in sliding engagement with the peripheral surface of the cylinder outer tubular portion 38. The other end of the dust cover 66 has an outwardly projecting flange portion 72 abutting against the flange portion 54 of the carrier 48. A coil spring 74 is held in compression between the flange portion 54 of the carrier 48 and an annular abutment 76 formed on a radially outwardly extending flange portion 78 of the cylinder housing 33, and thus tends to urge the flange 72 of the dust cover 66 engaged with the flange portion 54 of the carrier 48 with the result that when the release bearing 60 is reciprocated, the dust cover 66 reciprocates in unison with the release bearing, the inner edge 70 of the dust cover lip 68 remaining in engagement with the peripheral surface of the outer tubular portion 36 of the slave cylinder housing 33.

As best shown at Figs. 2, 3 and 5, the slave cylinder housing 33 has a pair of diametrically arranged outwardly projecting lugs 80 disposed at the end of the outer tubular portion 38 of the slave cylinder housing 33. During assembly of the slave cylinder 16, the lugs 80 are arranged within the dust cover 66 by snapping the edge lip 68 of the dust cover over the outwardly projecting lugs 80. Preferably, and as best shown at Fig. 5, the dust cover 66 is provided with a pair of diametrically disposed longitudinal projections, in the form of inwardly directed U-shaped channels or dimples 82, which limit the permissible rotation of the dust cover 66 relative to the cylinder casing 33 to a maximum of 180° as a result of lateral abutment of the U-channel or dimple side-walls with a side of the lugs 80.

The dust cover 66, in addition to acting as a seal preventing introduction of dirt below the dust cover, acts as a retainer preventing travel of the carrier 48 and the release bearing 60 after assembly of the slave cylinder 16 beyond the limits defined by the inner face of the dust cover lip 68 engaging the lugs 80, under the urging action of the compressed coil spring 74. The coil spring 74 is relatively weak and operates only to urge the release bearing 60 constantly in engagement with the end of the fingers 64 of the clutch release mechanism, after installation of the slave cylinder 16 in a motor vehicle transmission.

In the example of structure illustrated, the inner race 62 of the release bearing 60 is free rotating. It will be readily apparent that the structure of the slave cylinder 16, as a result of a slight modification of the carrier 48 causing the carrier and flange 54 and rim 56 to engage the inner race of a release bearing, may be adapted to reciprocate a release bearing whose outer race is free-rolling and in engagement with the end of the fingers 64 of a clutch release mechanism. It will be appreciated that the clutch assembly 11, Fig. 1, may be a bent finger diaphragm spring clutch, as schematically illustrated or, alternatively, it may be a flat finger diaphragm spring clutch, or a coil spring clutch.

A restraining strap for shipping and installation, designated generally at 84, is provided for retracting the release bearing 60 to the position shown in full lines in Fig. 3, after assembly of the slave cylinder 16, against the action of the compressed coil spring 74. The restraining strap 84 holds the release bearing 60 and hence carrier 48 in a retracted position during filling of the hydraulic system with hydraulic fluid, during shipment to a motor vehicle manufacturer and during assembly of the hydraulic clutch release system on a motor vehicle. Prefilling of the system may be effected by filling the reservoir 29, Fig. 2, the master cylinder 28, the line 27 and the slave cylinder 16 with hydraulic fluid at a pressure slightly over atmospheric pressure, while the bleed nipple 26 is open until all atmospheric air is evacuated from the system. Alternatively, atmospheric air may be evacuated from the whole apparatus and the apparatus subsequently filled with fluid. ————————————————————————————

————————————————— In addition to providing a clutch release hydraulic unit which is ready to be assembled on a motor vehicle on the assembly line or otherwise, prefilling of the apparatus facilitates testing of the apparatus after assembly to check for leakage and proper operation, before shipment to a motor vehicle manufacturer.

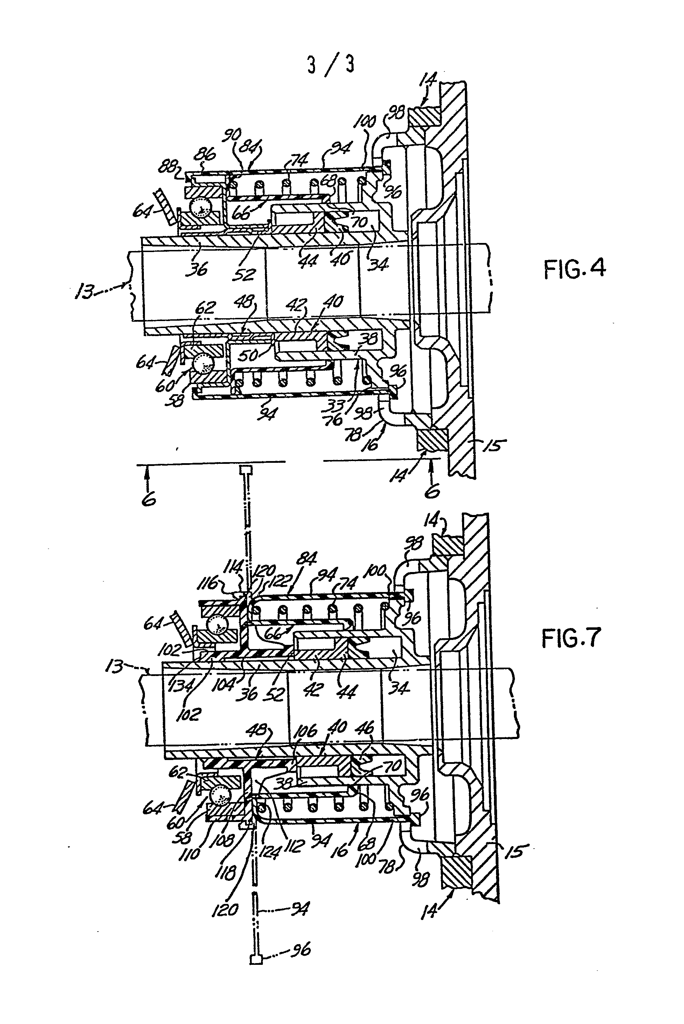

The restraining strap 84 is preferably molded of plastics, such as nylon, and comprises an annular collar 86 provided with a pair of substantially parallel inwardly directed end flanges 88 and 90 (Figs. 3 - 5) fitting over respectively a flange 92 formed on the end of a rim portion 56 of the carrier 48 and the end of the flange 72 of the dust cover 66 may be molded in a single piece, not shown. In Figs. 4 and 6, a pair of bands or strips 94 are integrally molded with and extend from the annular collar 86, the free end of each band or strip 94 terminating at an integral strut 96 disposed transversely, e.g. at right angles, to the axis of the band or strip 94 and permitting attachment of the end of each band or strip 94 to the slave cylinder housing 33. The slave cylinder housing 33 is provided with a pair of T-slots 98 diametrically disposed on the front face of the housing flange portion 78. Each band or strip 94 of the restraining strap 84 is provided with a weakened portion 100, which may be a portion of reduced thickness as will be the result of forming a V-groove, as shown, on the surface of the band or strip 94, or a portion of reduced width, or both.

After installation of the system of Fig. 1 in a motor vehicle, and upon first actuation of the slave cylinder 16, hydraulic fluid displaced from the master cylinder 28 to the annular chamber 34 in the slave cylinder casing 33 causes displacement of the seal 46 and piston 40, and displacement of the release bearing 60 as a result of the coupling between the piston 40 and the release bearing through the carrier 48, with the result that the bands or strips 94 are broken at their weakened portion 100, thus releasing the release bearing 60 for normal operation by the slave cylinder 16.

The structure of the casing 33 of the slave cylinder 16 of Figs. 7 and 8 is identical to that of Figs. 2 - 5, i.e. the casing 33 is preferably made of a single-piece casting, with integral concentric tubular portions 36 and 38 and an integral radially projecting portion or lug 17, not shown at Figs. 7 and 8. In the structure

of Fig. 7, movements of the annular piston 40 are

transmitted to the release bearing 60 by means of a single-piece molded carrier 48 made of plastic, such as nylon for example. The carrier 48 has a tubular body 102, preferably provided with longitudinal grooves on a portion of its internal surface, as shown at 104, forming lubricant reservoirs and decreasing the internal surface area of the carrier tubular body 102 in sliding engagement with the peripheral surface of the cylinder inner tubular portion 36. The carrier tubular body 102 has, at an end, an outwardly projecting flange 106 of relatively small diameter abutting against the annular outer end face 52 of the cylindrical portion 42 of the piston 40. The outer race 58 of the release bearing 60 is supported from the carrier 48, at the other end of the carrier tubular body 102, by way of a radially outwardly extending integral flange 108 having a forwardly extending rim 110 in which is nested the outer race 58 of the release bearing 60. A plurality of ribs 112 are integrally formed in the back of the flange 108, extending generally between the flange 108 and the end flange 106 of the carrier tubular body 102 to increase the rigidity of the carrier 48.

In Fig. 7, the restraining strap 84 and the dust cover 66 are formed integrally of a single-piece molding provided at one end with an annular rim or collar 114 having an edge lip 116 adapted to snap over a raidal annular projection 118 of the carrier flange 108. The band or strips 94 of the restraining strap 84 are molded radially as illustrated in dash lines, and the end of each strip or band 94 integrally connected to the annular rim or collar 114 is preferably longitudinally slit on each side, as shown at 120, such as to curve progressively, as shown at 122, when the lug 96 at the end of each strip or band 94 is passed through the T-slot 98 in the cylinder casing flange 78. The annular rim or collar 114 of the restraining strap 84 has an inwardly directed integral flange portion 124, disposed behind the carrier flange 108 and integrally forming the end of the dust cover 66, which is of the same shape as previously described. The casing lugs 80 at the end of the outer tubular portion 38 of the slave cylinder casing 33 over which is snapped the lip or flange 68 of the dust cover 66 are present in the structure of Fig. 7, but not shown.

The present invention also contemplates forming the———————————carrier 48 and the restraining strap 84 of a single piece plastic molding, as illustrated at Fig. 8, wherein the strips or bands 94 of the restraining strap 84 are shown molded integrally attached to the flange 108 of the carrier 48. For ease of manufacturing, the dust cover 66 is molded as a separate unit having an outwardly extending end flange 126 fastened to the rear surface of the carrier flange 108 by any convenient means such as heat-welding or by way of a plurality of apertures 128 through which are passed projections 130, integrally molded projecting from the rear surface of the carrier flange 108, which are subsequently, during assembly, heat- formed to a retaining rivet-like head shape 132. Of course the dust cover could be moulded integrally with the carrier 48 whether or not the restraining strap 84 is integral with the carrier.

An important feature of the carrier 48 of Figs. 7 - 8 is the provision of a resilient flexible lip 134 formed at the outer end, or front edge, of the carrier tubular body 102. The carrier 48 is molded with the flexible lip 134 at the front edge of the tubular body 102 inwardly directed or converging toward the centerline of the carrier tubular body 102, Fig. 9, such that when the carrier 48 is installed around the periphery of the inner tubular portion 36 of the casing 33, the lip 134 is elastically urged at its tip 136 in tight engagement with the peripheral surface of the cylinder inner tubular portion 36 such as to form a seal preventing introduction of dirt into the internal bore of the carrier. The sharp tip 136 at the lip 134 further acts as a convenient means for wiping dirt that may collect around the periphery of the inner tubular portion 36 during normal service of the motor vehicle on which the clutch actuating slave cylinder 16 is installed.

It is envisaged that the present invention will be applicable to actuators other than slave cylinders.

CLAIMS

1.      An actuator for a motor vehicle clutch, said actuator including actuating means (40), for transmitting movement through an output member (48) to a release bearing (60) for the clutch, characterised in that said output member (48) includes a resilient lip (134) which slidably engages an adjacent portion (36) of the actuator to form a seal.

2.      An acutator according to claim 1 characterised in that said output member (48) comprises a sleeve.

3.      An actuator according to claim 2 characterised in that the lip (134) converges towards the axis of the sleeve (48).

4.      An actuator according to claim 3 characterised in that the lip (134) terminates at a sharp tip.

5.      An actuator according to any preceding claim characterised in that actuating means is a piston (40) slidable in a chamber (34), the chamber being defined between first and second members (36, 38), and said lip (134) engaging said first member (36).

6.      An actuator according to claim 5 characterised in that the first and second members (36, 38) are tubular and the first tubular member (36) is disposed coaxially within the second tubular member (38).

7.      An actuator according to any preceding claim characterised in that said output member (48) comprises a sleeve which includes a radial flange (108) and a portion (102) extending axially beyond said flange, which portion is provided with said lip (134).

8.      An actuator according to claim 7 characterised in that said flange (108) includes a rim (110) for locating the release bearing (60).

9.      An actuator according to claim 8 characterised in that said rim (110) extends longitudinally from an edge of said flange (108).

10.     An actuator according to any preceding claim characterised in that there is provided biasing means (74) for constantly urging the release bearing (60) in a given direction and a protective cover (66) fast, in use, with said release bearing, said cover (66) being co-operable with stop means (80) to limit displacement of said release bearing (60) by said biasing means (74).

11.     An actuator for a motor vehicle clutch, said actuator including actuating means (40) for transmitting movement to a release bearing (60) for the clutch, characterised in that there is provided biasing means (74) for constantly urging the release bearing (60) in given direction and a protective cover (66) fast, in use, with said release bearing, said cover (66) being co-operable with stop means (80) to limit displacement of said release bearing (60) by said biasing means (74).

12.     An actuator according to claim 10 or 11 characterised in that dust cover (66) is tubular and surrounds a tubular member (38) housing said actuating means (40), said cover (66) including an inwardly directed flange (68) which slidably engages said tubular member (38).

13.     An acutator according to claim 12 characterised in that said inwardly directed flange (68) co-operates with said stop means (80) to limit said displacement.

14.     An actuator according to claim 12 or 13 characterised in that said stop means comprises a projection (80) on said tubular member (38).

15. An actuator according to any of claims 10 to 14 characterised in that said cover (66) includes an inwardly projecting portion (82) which extends longitudinally of the cover.

16. An actuator according to any of claims 10 to 15, and in the case where the actuating means (40) transmits movement through an output member (48), characterised in that said cover (66) is formed integrally with said output member (48).

17. An actuator according to any preceding claim, and in the case where the actuating means (40) transmits movement through an output member (48), characterised in that there is provided a shipping and installation device (84) comprising elongate connector means (94) fast at one end to a casing (33) of the actuator and fast at the other end to a holding portion (86; 114; 108) so as to inhibit unwanted movement of said output member during shipping, said connector means (94) having a portion (100) of reduced strength such that first actuation of said actuator causes said connector means to break at said portion of reduced strength whereby said actuator is thereafter free to operate normally.

18. An actuator for a motor vehicle clutch, said actuator including actuating means (40) for transmitting movement through an output member (48) to a release bearing (60) for the clutch, characterised in that there is provided a shipping and installation device (84) comprising elongate connector means (94) fast at one end to a casing (33) of the actuator and fast at the other end to a holding portion (86; 114; 108) so as to inhibit unwanted movement of said output member during shipping, said connector means (94) having a portion (100) of reduced strength such that first actuation of said actuator causes said connector means to break at said portion of reduced strength whereby said actuator is thereafter free to operate normally.

19. An actuator according to claim 17 or 18 characterised in that the holding portion (86; 114; 108) of the shipping and installation device is annular.

20. An actuator according to any of claim 17 to 19 characterised in that said holding portion is attached to (86, 114) or integral with (108) said output member (48).

21. An actuator according to any of claims 17 to 20, and in the case where a protective cover (66) is provided, characterised in that the shipping and installation device (84) is attached to or integral with said cover.

22.     An actuator according to any preceding claim, and in the case where the actuating means is a piston (40) slidable in a chamber (34), characterised in that said chamber (34) is defined by first and second members (36, 38) made integrally in one piece.

23.     An actuator for a motor vehicle clutch, said actuator including a piston (40) slidable within a chamber (34) for transmitting movement to a release bearing (60) for the clutch, characterised in that said chamber (34) is defined by first and second members (36, 38) made integrally in one piece.

24.     An actuator according to any preceding claim characterised in that said actuator is a slave cylinder (16) connected by a conduit (27) to a master cylinder (28) and said master cylinder, conduit and slave cylinder are prefilled with hydraulic fluid prior to installation in a vehicle.

25.     An actuator according to any preceding claim, and in the case where the actuating means is a piston (40), characterised in that said piston (40) has a relatively thin walled portion (42) integral therewith through which movement is transmitted to said output member (48).

FIG.1

FIG.2

FIG.3

FIG.5

FIG. 6

FIG. 9

FIG. 8

FIG. IO

FIG.4

FIG.7

0119784

## European Patent Office

## EUROPEAN SEARCH REPORT

Application number

EP  84 30 1465

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 112 490  (AUTOMOTIVE PRODUCTS)<br>* Whole document * | 11-14, 16 | F 16 D  25/08 |
| Y | | 10 | |
| A | | 15 | |
| | --- | | |
| X | GB-A-2 121 504  (AUTOMOTIVE PRODUCTS)<br>* Whole document * | 17-21, 24,25 | |
| Y | | 16 | |
| | --- | | |
| X | EP-A-0 074 671  (LUK)<br>* Page 11, figure 1 * | 23 | TECHNICAL FIELDS SEARCHED (Int. Cl. 3) |
| Y | | 22 | F 16 D  25/00 |
| | --- | | |
| Y | GB-A- 599 807  (PESCO PRODUCTS)<br><br>* Whole document * | 1-3,5-7,10, 16,22 | |
| A | | 8 | |
| | ---          -/- | | |

The present search report has been drawn up for all claims

| Place of search | Date of completion of the search | Examiner |
|---|---|---|
| THE HAGUE | 04-06-1984 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO Form 1503. 03.82

0119784

European Patent
Office

**EUROPEAN SEARCH REPORT**

Application number

EP 84 30 1465

| | **DOCUMENTS CONSIDERED TO BE RELEVANT** | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| Y | GB-A-1 550 613 (AUTOMOTIVE PRODUCTS)<br><br>* Page 5, figure 2 *<br><br>--- | 1-3,5-7,10,16,22 | | |
| A | GB-A-2 116 282 (FICHTEL & SACHS)<br><br>--- | | | |
| A | FR-A-2 512 143 (SKF KUGELLAGERFABRIKEN)<br><br>--- | | | |
| A | GB-A-2 109 504 (SKF KUGELLAGERFABRIKEN)<br><br>----- | | | |
| | | | **TECHNICAL FIELDS SEARCHED (Int. Cl. ³)** | |
| | The present search report has been drawn up for all claims | | | |

| Place of search | Date of completion of the search | Examiner |
|---|---|---|
| THE HAGUE | 04-06-1984 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82